# EUROPEAN PATENT APPLICATION

(11) **EP 2 876 140 A1**
(43) Date of publication of application: **27.05.2015**
(21) Application number: 14193289.7
(22) Date of filing: 14.11.2014
(51) Int. Cl.: C09D 5/16, C09D 175/06

(54) **An anti-fingerprint coating composition and a method for applying this coating composition to surfaces**

(30) Priority: 25.11.2013 TR 201313682
(71) Applicant: ECZACIBASI YAPI GERECLERI SANAYI VE TICARET ANONIM SIRKETI, 34394 Istanbul (TR)
(72) Inventor: Tunali, Ayse, 11300 Bozuyuk-Bilecik (TR); Tamsü Selli, Neslihan, 11300 Bozuyuk-Bilecik (TR); Güleryüz, Emre, 11300 Bozuyuk-Bilecik (TR); Kesmez, Ömer, 07058 Antalya (TR); Burunkaya, Esin, 07058 Antalya (TR); Akarsu, Murat, 07058 Antalya (TR); Arpac, Ertugrul, 07058 Antalya (TR)
(74) Representative: Petraz, Gilberto Luigi

(57) **Abstract**

The present invention relates to a coating composition which prevents fingerprints on surfaces, and to a method for applying this coating composition to surfaces and products/surfaces comprising the composition prepared according to the invention.

The composition developed within the scope of the invention basically comprising coloring effect pigment, matting agent, and binder. Other constituents added into the composition are additives like solvent for providing the suitable viscosity for coating of the obtained mixture; anti-foaming and viscosity-modifier agents.

## Description

### Subject of the Invention

The present invention relates to a coating composition which prevents fingerprints on surfaces, and to a method for applying this coating composition to surfaces and products/surfaces comprising the composition prepared according to the invention.

### Present State of the Art

Today, since materials such as glass, stainless steel, and plastic widely used in many areas directly reflect the fingerprint, the surfaces of the products made of these materials are adversely affected in aesthetic terms, and due to this problem, the products look dirty. In order to provide a solution to this problem, anti-fingerprint (preventing fingerprints) coatings have been developed. The formation of fingerprints on surfaces is prevented as a result of coating the surfaces of the products with these coatings having been developed. Thus, no fingerprint is left on the surfaces and the surfaces look cleaner.

Within the state of the art, anti-fingerprint coatings are obtained by using fluorine compounds. Thanks to this coating applied to surfaces, there remains no dirt by way of repelling the oil on the surfaces contacting with fingers. In another method applied for preventing fingerprints on the surfaces, a physical approach is used; namely, the surface is roughened so that the contact of the whole finger with the surface is prevented, and thus no fingerprint is observed on the surface.

During the usage of various surfaces, an unaesthetic dirty appearance (i.e. stains) is formed on the surface due to the passage of sweat, oil and cosmetic materials from fingers to the surface.

Some of the solutions offered in the present state of the art regarding the coatings preventing the formation of fingerprints are stated below.

The patent document No. US 2009/0087649 A1 relates to an anti-fingerprint coating method applied on stainless steel plates as several layers in the form of coating or tapes. The disadvantage of this method is that it is a system made of many layers.

In the patent document No. US 2009/0110921 A1, on the other hand, anti-fingerprint feature is achieved by coating metallic surfaces with coating materials comprising fluorine compounds. This method is disadvantageous in that compounds with fluorine content, which can be hazardous to the environment and human health, are used. The coating composition comprises at least one fluorine compound; wherein it is stated that these compounds can be fluorotitanic acid or fluorozirconic acid.

The coating composition developed within the scope of the invention, on the other hand, is a coating composition having high mechanical and chemical resistance; besides, it is glossy and colorable. Nowadays, the coatings having high mechanical and chemical resistance and anti-fingerprint feature, at the same time being colorable, are widely used in many areas, for example in mobile phones, electrical household appliances, white appliances, computer bodies, lifts, and concealed cistern panels. The anti-fingerprint feature of a surface depends on the fact that the incoming light reflects from the surface by being scattered, which, in turn, depends on the surface having of rough structure. Rough surfaces are generally matt/unpolished (i.e. dull). Within the scope of the coating composition according to the invention, effect pigments of different color and size are used; and thus achieving glossy surfaces.

### Object of the Invention:

The object of the invention is to develop an environmentally friendly composition which prevents fingerprints on the surfaces to which it is applied, which is colorable, has high mechanical resistance, and does not comprise any fluorine compound.

Another object of the invention is to develop a composition which provides the surface to which it is applied with glossy appearance, just like that of the metal, and which prevents fingerprint formation on the surface to which it is applied.

Yet another object of the invention is to develop a composition with protective features which has a high chemical resistance.

And another object of the invention is to develop a method for applying the newly developed coating composition to surfaces.

### Description of the Invention:

The present invention relates to a coating composition which prevents fingerprints on surfaces, and to a method for applying this coating composition to surfaces and products/surfaces comprising the composition prepared according to the invention.

The coating composition developed within the scope of the invention basically comprising two components (i.e. constituents), wherein the first constituent includes polyols with polyurethane, acrylic, polyester, epoxy content or the combinations thereof; a solvent from at least one of, or in the form of the combination of methoxypropyl acetate, butyl acetate, ethyl acetate, xylene, toluene solvents; one and/or more organic and/or inorganic matting agent(s) for providing the composition with anti-fingerprint property (AFP); catalyst and coloring agent in suitable amounts for hardening the system in desired time; and also effect pigments making it glossy. Effect pigments may not be added into the composition in case the composition is desired to be transparent/colorless. The second constituent within the composition is at least one polyisocyanate compound for achieving polyurethane structure and forming polymeric network. After the two constituents are mixed homogeneously, the composition is applied to the surface.

Other constituents added into the composition comprises other additives like solvent for providing the suitable viscosity for coating of the obtained mixture, anti-foaming and viscosity-increasing agents.

In the coating composition according to the invention, polyurethane system is used as the binding system. Polyurethane binding system is formed by various combinations of polyol and polyisocyanate resins.

In the composition developed within the scope of the invention, non-fluorine polyol resins with epoxy, polyurethane, acrylic or polyester content and/or the combinations thereof may be used as binding system; besides, resins having a hybrid structure modified by the combination of inorganic and organic resins may also be used. Within the scope of the invention, the use of polyester polyol resin is preferred; wherein mostly the resins selected from those with the trade names Desmophen 651 MPA/X, Desmophen 670, Synthoester 1018 can be used.

The effect pigments used within the scope of the invention are chemicals which are suitable for the used binding system and of suitable particle size and which provide color and metallic appearance. The effect pigments providing color and shine which are used in the composition according to the invention may be organic or inorganic. The pigments used within the scope of the invention are selected from commercially available products including Timrex KS4, Iriodin 120, Iriodin 300, Iriodin 120, Iriodin 323, TiO₂, Red Brown 502, Flash Blue 289, Iridesium 103, Iridesium 111, Iridesium 120, and Iridesium 123. The additional pigments may be selected among the products including Aluminium 08, Aluminium 8880, Aluminium 70000/2/NL, Aluminium R280, etc., which are sold by the firm AVL Metal Powders. According to what color the composition is desired to be provided with, the pigment or pigment combinations which will provide that color are used. When examined in terms of ratios, pigment and/or pigment combinations added into the composition may be used in an amount of 20 to 70%, or mostly 40 to 65%, or preferably 55 to 60% by weight according to polyol and polyisocyanate solids being used as the binder constituents. Although any pigment is capable of providing color, it is a must that the pigment to be used will provide color, but at the same time will not adversely affect anti-fingerprint feature of the composition.

The matting agent used in the composition may have a modified or non-modified organic and/or inorganic structure. Commercially available organic Deuteron MK, Deuteron MPO, Deuteron MM823, etc. and/or inorganic ACEMATT OK 607, ACEMATT OK 412, ACEMATT OK 500, etc. may preferably be used as the matting agent. The ratio of matting agent in the final product may be between 1 and 7% by weight; however, 3% is the preferred ratio. Dibutyltin dilaurate (DBTL) is preferably used as the catalyst within the composition.

The size of the matting agent used within the scope of the invention is 4.5 µm in average, while the size of coloring pigments may vary between 15 and 60 µm in particular. When this rate exceeds 100 µm, anti-fingerprint feature of the composition is lost.

In the composition developed within the scope of the invention, ethyl acetate, butyl acetate, xylene, toluene, etc. are used as solvent. The anti-foaming agents added into the composition are additives that reduce surface tension and prevent formation of foam. The used anti-foaming agents may be insoluble oils, dimethyl polysiloxanes, other silicones, some alcohols, stearates, and glycols. Anti-foaming agents can be used both for preventing foam formation, and for eliminating the already present foam. In the composition according to the invention, hydroxyethyl cellulose is preferably used as viscosity modifier.

Solvents are added such that the solid ratios of the systems diluted with solvent mixtures will be 15 to 50%, or mostly 20 to 40%, or preferably 25 to 30% by weight for colorful AFP (anti-fingerprint) coating solutions; while this ratio is 5 to 20%, or mostly 7 to 18%, or preferably 9 to 16% by weight for colorless AFP (anti-fingerprint) coating solutions.

In the composition according to the invention, the polyisocyanate compound used as the second constituent can be one of the following commercially available products; Desmodur N75 and Desmodur N3200, but different isocyanate compounds may also be preferred. Said products are mostly the products with Hexamethylene Diisocyanate content.

The equivalent ratio of polyol to isocyanate resin (polyol : isocyanate) is 1 : 0.6 or 1 : 1 or 1 : 1.4 while preparing colorful or colorless anti-fingerprint (AFP) coating solutions. Cleaning, abrasion and primer coating processes are performed onto the surfaces which will be coated with the composition developed within the scope of the invention prior to application of the composition. Afterwards, the anti-fingerprint coating composition for preventing fingerprint formation developed within the scope of the invention is applied onto surfaces by way of spraying method.

In order to clean the surfaces to which the coating composition for preventing fingerprint formation and remaining of fingerprints on the surfaces will be applied, Almeco (Henkel P3 almeco 18) solution 5% by weight with distilled water is prepared and the surfaces to be coated are kept in almeco solution heated up to suitable temperature in ultrasonic bath in sonicator for 15 minutes or for a suitable period of time according to the dirt level of the surfaces. Afterwards, samples obtained from the solution are washed with tap water and kept in nitric acid solution for a suitable period of time. Samples obtained from the acid are subjected to three separate distilled water baths and then dried in drying oven. Subsequent to the cleaning of the surfaces, a mixture of water glass and zinc powder is prepared for abrasion process. The mixture is heated up to a suitable temperature while being mixed. The surfaces which were cleaned are put into the mixture of water glass - Zn powder at a suitable temperature range for a suitable period of time. The samples/parts obtained from the mixture of water glass and Zn powder are washed immediately with tap water until no dirt remains on their surfaces. The samples are immersed into distilled water pot for at least three times after being washed with tap water and samples treated with distilled water are dried until making sure that they are fully dried. After cleaning and abrasion processes primer substance application are performed onto the surfaces of the samples and subsequent to primer application, the coating composition developed within the scope of the invention and preventing the formation and remaining of fingerprints on surfaces, are applied to the surfaces of the samples. Cleaning, abrasion and primer application processes are explained in more detail below.

In order to clean the surfaces, Almeco (Henkel P3 almeco 18) solution 5% by weight is prepared with distilled water. The surfaces to be coated are kept in almeco solution heated up to 80°C in ultrasonic bath in sonicator for 15 minutes. This duration may vary depending on the dirt level of, or the oil present on the surfaces. The samples obtained from the solution are washed with tap water and kept in 10% nitric acid solution for 5 minutes. The samples obtained from the acid are subjected to three separate distilled water baths, and then dried in drying oven.

After the surfaces are cleaned, abrasion is performed. For this process, a mixture of water glass (NaSiO₃) and zinc powder is prepared. For this mixture, 1g Zn powder is added into 36 g water glass, the solid ratio of used water glass is 6 to 20% particularly 8 to 18%, preferably 10 to 16% by weight. The use of 36 g water glass, the solid ratio of which is 12.5%, is preferred for this process. A temperature between 50 and 80°C, and particularly between 55 and 70°C, is suitable for abrasion process; however, the process is preferably performed at 60-65°C. The mixture is heated up to 60°C while being mixed. The surfaces to be coated can be kept in the mixture of water glass and zinc for 0.5 to 7 minutes, particularly for 1 to 5 minutes, more preferably for 1.5 to 3 minutes. The surfaces having been cleaned are kept in the mixture of water glass and Zn powder at 60°C for 2 minutes.

The samples/parts obtained from the mixture of water glass and Zn powder are immediately washed with tap water until no dirt remains on the surface. The samples taken from tap water are immersed in distilled water pot for at least three times, and finally the samples treated with distilled water are dried until making sure that they are fully dried.

Primer application can be performed on the surfaces the abrasion process of which has been completed. The number of functional groups on the surface to which the anti-fingerprint coating for preventing fingerprints on the surfaces developed within the scope of the invention will be applied becomes insufficient for holding of the applied coating. Therefore, various primers are applied to the surfaces in order to increase holding of the coatings applied thereon. For primer application, compounds such as N-(2-aminoethyl)-3-aminopropyltrimethoxysilane (DAMO), N-Methylamino propyl trimethoxysilane (MAMMO), 3-aminopropyl trimethoxysilane (AMMO) may be used. After the preliminary preparation processes, i.e. cleaning, abrasion, and primer application on the surface, the coating composition developed within the scope of the invention is applied to the surface. Spraying method is used as the application method, but the use of different methods is also possible within the scope of the invention.

It is also possible that the coating developed within the scope of the invention is applied to surfaces in colorful manner. In order provide the polyurethane binding system formed for that purpose with the desired colors, organic and/or inorganic pigments, or the combinations of these pigments and again matting agent are added. And the resulting coating solutions are applied to surfaces after obtaining suitable dispersions thereof.

Thanks to the composition developed within the scope of the invention, a coating composition which has a high mechanical and chemical resistance, which is colorable, and which is applicable to surfaces by way of spraying method or other different methods is obtained. Products/surfaces comprising the composition prepared according to the invention is also within the scope of the invention.

## Claims

1. A coating composition for preventing fingerprint formation on surfaces, **characterized in that** it is a two-constituent composition and the first one of said constituents comprises;
• non-fluorine polyol resins with epoxy, polyurethane, acrylic or polyester content and/or the combinations thereof, or resins having a hybrid structure modified by the combination of inorganic and organic resins,
• at least one type of organic or inorganic matting agents and/or the combinations thereof,
• at least one type of pigments which is coloring agents and providing the surface to be glossy, which are used in case the composition is desired to be colorful, but not used in case the composition is desired to be colorless/transparent,
• at least one type of solvents and/or solvent combinations, and
• a catalyst;
and **in that** the second constituent is polyisocyanate compound.

2. The composition according to Claim 1, **characterized in that** the composition becomes ready for use after said two constituents are mixed homogeneously.

3. The coating composition according to Claim 1, **characterized in that** it has a polyurethane structure formed by various combinations of at least one polyester polyol resin and polyisocyanate compound.

4. The composition according to Claim 3, **characterized in that** equivalent ratio of polyol to isocyanate (polyol : isocyanate) is one of 1 : 0.6 or 1 : 1 or 1 : 1.4.

5. The coating composition according to Claim 1, **characterized in that** it further comprises anti-foaming and viscosity increasing agents as additives.

6. The coating composition according to Claim 1, **characterized in that** the size of the used pigments is between 15 and 60 µm.

7. The coating composition according to Claim 1, **characterized in** comprising matting agent in the amount of 1 to 7% or more preferably in the amount of 3% by weight within the final solid product.

8. The coating composition according to Claims 7 and 8, **characterized in that** the size of the used matting agent is 4.5 µm in average.

9. The composition according to Claim 1, **characterized in that** said solvent is at least one of, or the combinations of methoxypropyl acetate, butyl acetate, ethyl acetate, xylene, and toluene.

10. The composition according to Claim 9, **characterized in** comprising said solvent in such a way that the solid ratio thereof in the final product will be one of 15 to 50% by weight or 20 to 40% by weight or 25 to 30% by weight for colorful coating solutions.

11. The composition according to Claim 9, **characterized in** comprising said solvent in such a way that the solid ratio thereof in the final product will be one of 5 to 20% by weight or 7 to 18% by weight or 9 to 16% by weight for colorless coating solutions.

12. The composition according to Claim 1, **characterized in that** the pigment and/or pigment combinations therein are present at a rate which can be one of 20 to 70% by weight or 40 to 65% by weight or 55 to 60% by weight with respect to the polyol and polyisocyanate solids, i.e. the binder constituents.

13. The composition according to Claim 5, **characterized in that** said viscosity modifier agent is hydroxyethyl cellulose.

14. The composition according to Claim 5, **characterized in that** said anti-foaming agent is at least one of the insoluble oils, dimethyl polysiloxanes, other silicones, some alcohols, stearates, and glycols.

15. The composition according to Claim 1, **characterized in that** said catalyst is dibutyltin dilaurate (DBTL).

16. A method for applying the coating composition mentioned in the preceeding claims to surfaces, **characterized in** comprising the process steps of;
• before applying the composition to the surfaces cleaning, abrasion and primer coating processes are applied to the surfaces firstly
• in order to clean the surfaces to which the coating composition for preventing fingerprint formation and remaining of fingerprints on the surfaces will be applied, preparing Almeco (Henkel P3 almeco 18) solution 5% by weight with distilled water,
• keeping the surfaces to be coated in almeco solution heated up to a suitable temperature preferably heated up to 80°C in ultrasonic bath in sonicator for 15 minutes or for a suitable period of time according to the dirt level of the surfaces,
• washing the samples obtained from the solution with tap water and keeping them in 10% nitric acid solution for a suitable period of time or preferably for 5 minutes,
• subjecting the samples obtained from the acid to three separate distilled water baths, and then drying them in drying oven,
• preparing a mixture of water glass and zinc powder for abrasion process subsequent to the cleaning of the surfaces,
• heating up the mixture to a suitable temperature while mixing the same,
• keeping the surfaces having been cleaned in the mixture of water glass - Zn powder which comprises 36 g water glass the solid ratio of which can be one of 6 to 20% or 8 to 18% or 10 to 16% by weight but preferably the solid ratio of which is 12.5% by weight and 1g Zn at a suitable temperature range between 50-80°C preferably between 60-65 °C for a suitable period of time such as 0.5-7 minutes, or 1-5 minutes, or for 1.5-3 minutes or preferably for 2 minutes,
• washing the samples/parts obtained from the mixture of water glass and Zn powder immediately with tap water until no dirt remains on the surface,
• immersing the samples into distilled water pot for at least three times after being washed with tap water,
• drying the samples treated with distilled water until making sure that they are fully dried,
• performing primer application onto the surfaces of the samples, the cleaning and abrasion processes of which have been completed, for primer coating applying at least one of the compounds of N-(2-aminoethyl)-3-aminopropyltrimethoxysilane (DAMO), N-Methylamino propyl trimethoxysilane (MAMMO), 3-aminopropyl trimethoxysilane (AMMO) to the surface
• subsequent to primer application, applying the coating composition developed within the scope of the invention and preventing the formation and remaining of fingerprints on surfaces, to the surfaces of the samples by way of spraying method.

17. Product/surface comprising the composition prepared according to the preceding claims.
